# FASCICULE DE BREVET EUROPEEN

(11) **EP 3 877 181 B1**
(45) Date de publication et mention de la délivrance du brevet: **03.07.2024**
(21) Numéro de dépôt: 19820838.1
(22) Date de dépôt: 08.11.2019
(51) Int. Cl.: B33Y 70/00, B29C 64/40, C08F 212/08

(54) **COMPOSITION COPOLYMÉRIQUE HYDROSOLUBLE**
WASSERLÖSLICHE COPOLYMERZUSAMMENSETZUNG
WATER-SOLUBLE COPOLYMER COMPOSITION

(30) Priorité: 08.11.2018 FR 1860275
(43) Date de publication de la demande: 15.09.2021
(73) Titulaire: ARKEMA FRANCE, 92700 Colombes (FR)
(72) Inventeur: BROCAS, Anne-Laure, 64170 LACQ (FR); BOURRIGAUD, Sylvain, 64170 LACQ (FR); CAZAUMAYOU, Sylvie, 64170 LACQ (FR)
(86) Numéro de dépôt international: PCT/FR2019/052667
(87) Numéro de publication internationale: WO 2020/095003

(56) Documents cités:
- WO-A1-2015/175682
- FR-A1- 3 030 529
- US-A1- 2005 288 428

## Description

### DOMAINE DE L'INVENTION

La présente invention se rapporte au domaine des copolymères hydrosolubles ou hydrodispersibles comprenant au moins un copolymère statistique comprenant du styrène, de l'acide méthacrylique, de l'acide acrylique et de l'acrylate de butyle.

De tels copolymères présentent une solubilisation ou une dispersibilité plus rapide dans l'eau que des copolymères connus de l'art antérieur.

Cette invention est appréciée dans diverses utilisations de ces copolymères comme agents dispersants pour pigments, comme modificateurs de rhéologie dans des applications aussi diverses que les boues de forage, les pâtes d'impression textile, la cosmétique, ou encore la détergence, les revêtements comme la peinture, les agents anti-sédimentation et/ou de mise en suspension pour des charges minérales ou organiques grossières par exemple dans des applications phytosanitaire, mais surtout dans l'impression tridimensionnelle (ou impression 3D) d'un objet et plus particulièrement comme matériaux sacrificiel du modelage par dépôt de filaments en fusion.

Concernant plus particulièrement le domaine de l'impression tridimensionnelle (ou impression 3D), cette technologie permet de fabriquer de manière additive (en anglais : « additive manufacturing » ou AM) un objet réel à partir d'un objet virtuel. Elle est basée sur la découpe de l'objet virtuel 3D en lamelles 2D de très fine épaisseur. Ces fines lamelles sont déposées une à une en les fixant sur les précédentes, ce qui reconstitue l'objet réel. Parmi les matériaux constitutifs de l'objet, on trouve les matériaux plastiques (notamment l'acrylonitrile butadiène styrène (ou ABS) et acide polylactique (ou PLA)), la cire, le métal ou les céramiques. Des exemples de techniques additives sont le dépôt de filaments en fusion (« fused déposition modeling » ou FDM) et le frittage par laser (en anglais « laser sintering »).

Le modelage par dépôt de filaments en fusion est une technique mécanique qui consiste à faire fondre un filament de matière synthétique (généralement du plastique type ABS ou PLA) à travers une buse d'extrusion chauffée à une température variant entre 160 et 270 °C. De cette buse en sort un filament en fusion, d'un diamètre de l'ordre du dixième de millimètre. Ce fil est déposé en ligne et vient se coller par re-fusion sur ce qui a été déposé au préalable. Cette technique permet de créer des pièces en bonne matière, disposant de caractéristiques mécaniques, thermiques et d'une stabilité identiques aux pièces thermoplastiques injectées. Cette technique a également un avantage important concernant la structure de support nécessaire à la production des pièces, puisque ce support de construction est dans la plupart des cas constitué dans une autre matière que celle constitutive de l'objet créé, matière qui est éliminée dudit objet, lorsque le processus de construction de ce dernier est fini.

Le support de construction est généralement une composition polymérique hydrosoluble ou hydrodispersible répondant à un cahier des charges bien précis. Parmi les propriétés recherchées, outre la résistance mécanique, la température de transition vitreuse du copolymère, sa stabilité thermique ou sa facilité de mise en oeuvre, la cinétique de solubilisation ou de dispersibilité dans l'eau est de première importance.

### ARRIERE-PLAN TECHNIQUE

EP 2447292, EP2699611 et EP 2041192 décrivent des copolymères ou des compositions solubles hydrodispersibles dans l'eau et utilisés dans le domaine de l'impression 3D.

Ces compositions sont constituées de copolymères statistiques comprenant des monomères tels que l'anhydride maléique (EP 2699611), l'acide méthacrylique (EP 2041192), plus généralement des acides α-β mono-carboxyliques insaturés (EP 2447292) polymérisés de façon radicalaire. WO2015175682 décrit un copolymère comprenant des groupes carboxyliques neutralisés soluble dans une solution aqueuse alcaline. WO9850477 décrit une composition de styrène, d'acrylate de butyle, d'acide acrylique et d'acide méthacrylique dans les exemples 3, 4 et 5. La demanderesse à constatée que ces compositions sont très difficiles à isoler d'un point de vue procédé.

Cependant de telles compositions présentent une cinétique de solubilisation ou de dispersibilité dans l'eau encore trop lente. Augmenter la proportion de monomères hydrophiles pourraient constituer une solution, mais dans ce cas d'autres caractéristiques importantes telles que la Tg, la stabilité thermique, certaines caractéristiques de procédé tel que la récupération du polymère, la fluidité à l'état fondu ou encore les propriétés mécaniques se trouvent dégradées.

La demanderesse a maintenant découvert qu'une composition comprenant un copolymère statistique comprenant de l'acide acrylique, de l'acide méthacrylique, de l'acrylate de butyle et du styrène présente une bien plus rapide dissolution que les compositions connues de l'art antérieur. Ainsi, le remplacement d'une faible proportion de l'acide méthacrylique par de l'acide acrylique permet une amélioration de la solubilisation tout en conservant les autres caractéristiques du produit obtenu (la température de transition vitreuse, la stabilité thermique, certaines caractéristiques de procédé tel que la récupération du polymère, la fluidité à l'état fondu ou encore les propriétés mécaniques)

### RESUME DE L'INVENTION

L'invention, telle que définie dans les revendications en annexe, concerne donc une composition comprenant un copolymère statistique, préparé par polymérisation radicalaire contrôlée, comprenant les monomères suivants :
- styrène, de 28 à 45 % massique, bornes comprises.
- acide méthacrylique, de 10 à 40 % massique, bornes comprises.
- acide acrylique, de 1 à 15 % massique, bornes comprises
- acrylate de butyle, de 18 à 35 % massique, bornes comprises.

### DESCRIPTION DETAILLEE

Par solubilisation ou une dispersibilité dans l'eau, on entend une solubilisation ou une dispersibilité dans une phase aqueuse dont le pH est compris entre 5,5 et 14, bornes comprises de préférence entre 8 et 12 et plus particulièrement entre 8 et 10 bornes comprises, dans une plage de température comprise entre 40 et 70°C.

Un copolymère est dit « dispersible », s'il forme à une concentration de 5% en poids dans un solvant, à 25°C, une suspension stable de fines particules, généralement sphériques. La taille moyenne des particules constituant ladite dispersion est inférieure à 1 um et, plus généralement, varie entre 5 et 400 nm, de préférence de 10 à 250 nm en poids. Ces tailles de particules sont mesurées par diffusion de lumière.

Lorsque le solvant est l'eau, on parle de copolymère « hydrodispersible ».

Les copolymères de l'invention sont préparés par polymérisation radicalaire ou par polymérisation radicalaire contrôlée. Lorsqu'il s'agit d'obtenir un copolymère hydrosoluble ou hydrodispersible, la demanderesse constate cependant qu'il est nécessaire d'utiliser la polymérisation radicalaire contrôlée et que le copolymère ainsi préparé est plus rapidement solubilisé ou dispersé en solution aqueuse.

A cet effet On pourra utiliser tout type de polymérisation radicalaire contrôlée dans le cadre de l'invention telle que la NMP ("Nitroxide Mediated Polymerization"), la RAFT ("Reversible Addition and Fragmentation Transfer"), l'ATRP ("Atom Transfer Radical Polymerization"), l'INIFERTER ("Initiator-Transfer-Termination"), la RITP (" Reverse Iodine Transfer Polymerization"), l'ITP ("Iodine Transfer Polymerization).

Selon une forme préférée de l'invention, les copolymères sont préparés par polymérisation contrôlée par les nitroxydes (NMP).

Plus particulièrement les nitroxydes issus des alcoxyamines dérivées du radical libre stable (1) sont préférées.

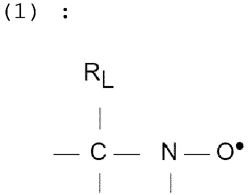

Dans laquelle le radical R_{L} présente une masse molaire supérieure à 15,0342 g/mole. Le radical R_{L} peut être un atome d'halogène tel que le chlore, le brome ou l'iode, un groupement hydrocarboné linéaire, ramifié ou cyclique, saturé ou insaturé tel qu'un radical alkyle ou phényle, ou un groupement ester -COOR ou un groupement alcoxyle -OR, ou un groupement phosphonate -PO(OR)₂, dès lors qu'il présente une masse molaire supérieure à 15,0342. Le radical R_{L}, monovalent, est dit en position β par rapport à l'atome d'azote du radical nitroxyde. Les valences restantes de l'atome de carbone et de l'atome d'azote dans la formule (1) peuvent être liées à des radicaux divers tels qu'un atome d'hydrogène, un radical hydrocarboné comme un radical alkyle, aryle ou aryle-alkyle, comprenant de 1 à 10 atomes de carbone. Il n'est pas exclu que l'atome de carbone et l'atome d'azote dans la formule (1) soient reliés entre eux par l'intermédiaire d'un radical bivalent, de façon à former un cycle. De préférence cependant, les valences restantes de l'atome de carbone et de l'atome d'azote de la formule (1) sont liées à des radicaux monovalents. De préférence, le radical R_{L} présente une masse molaire supérieure à 30 g/mole. Le radical R_{L} peut par exemple avoir une masse molaire comprise entre 40 et 450 g/mole. A titre d'exemple, le radical R_{L} peut être un radical comprenant un groupement phosphoryle, ledit radical R_{L} pouvant être représenté par la formule :

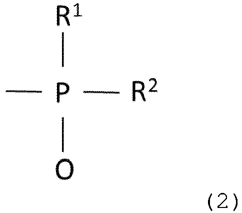

Dans laquelle R¹ et R², pouvant être identiques ou différents, peuvent être choisis parmi les radicaux alkyle, cycloalkyle, alkoxyle, aryloxyle, aryle, aralkyloxyle, perfluoroalkyle, aralkyle, et peuvent comprendre de 1 à 20 atomes de carbone. R³ et/ou R⁴ peuvent également être un atome d'halogène comme un atome de chlore ou de brome ou de fluor ou d'iode. Le radical R_{L} peut également comprendre au moins un cycle aromatique comme pour le radical phényle ou le radical naphtyle, ce dernier pouvant être substitué, par exemple par un radical alkyle comprenant de 1 à 4 atomes de carbone.

Plus particulièrement les alcoxyamines dérivées des radicaux stables suivants sont préférées :
- N-tertiobutyl-1-phényl-2 méthyl propyl nitroxyde,
- N-tertiobutyl-1-(2-naphtyl)-2-méthyl propyl nitroxyde,
- N-tertiobutyl-1-diéthylphosphono-2,2-diméthyl propyl nitroxyde,
- N-tertiobutyl-1-dibenzylphosphono-2,2-diméthyl propyl nitroxyde,
- N-phényl-1-diéthyl phosphono-2,2-diméthyl propyl nitroxyde,
- N-phényl-1-diéthyl phosphono-1-méthyl éthyl nitroxyde,
- N-(1-phényl 2-méthyl propyl)-1-diéthylphosphono-1-méthyl éthyl nitroxyde,
- 4-oxo-2,2,6,6-tétraméthyl-1-piperidinyloxy,
- 2,4,6-tri-tert-butylphenoxy nitroxyde.
- N-tertiobutyl-1-diéthylphosphono-2,2-diméthyl propyl nitroxyde.

Les alkoxyamines utilisées en polymérisation radicalaire contrôlée doivent permettre un bon contrôle de l'enchaînement des monomères. Ainsi elles ne permettent pas toutes un bon contrôle de certains monomères. Par exemples les alcoxyamines dérivées du TEMPO ne permettent de contrôler qu'un nombre limité de monomères, il en va de même pour les alcoxyamines dérivées du 2,2,5-tri-methyl-4-phenyl-3-azahexane-3-nitroxyde (TIPNO). En revanche d'autres alcoxyamines dérivées des nitroxydes répondant à la formule (1), particulièrement celles dérivées des nitroxydes répondant à la formule (2) et encore plus particulièrement celles dérivées du N-tertiobutyl-1-diéthylphosphono-2,2-diméthyl propyl nitroxyde permettent d'élargir à un grand nombre de monomère la polymérisation radicalaire contrôlée de ces monomères.

En outre la température d'ouverture des alcoxyamines influe également sur le facteur économique. L'utilisation de basses températures sera préférée pour minimiser les difficultés industrielles. On préfèrera donc les alkoxyamines dérivées des nitroxydes répondant à la formule (1), particulièrement celles dérivées des nitroxydes répondant à la formule (2) et encore plus particulièrement celles dérivées du N-tertiobutyl-1-diéthylphosphono-2,2-diméthyl propyl nitroxyde à celles dérivées du TEMPO ou 2,2,5-tri-methyl-4-phenyl-3-azahexane-3-nitroxyde (TIPNO).

Les monomères constitutifs des copolymères seront choisis parmi le styrène, l'acide méthacrylique, l'acide acrylique et l'acrylate de butyle.

La proportion massique des monomères est choisie dans les gammes suivantes :
- styrène, de 28 à 45 % massique, de préférence de 28 à 40 % bornes comprises.
- acide méthacrylique, de 10 à 40 % massique, de préférence entre 15 et 36 % bornes comprises.
- acide acrylique, de 0.5 à 15 %, de préférence entre 1 et 5 % bornes comprises.
- acrylate de butyle, de 18 à 35 % massique, de préférences de 20 à 30 % bornes comprises.

La masse moléculaire en poids des copolymères hydrosoluble ou hydrodispersibles objet de l'invention est comprise entre 30000 g/mole et 300000 g par mole, de préférence entre 70000 et 170000 g/mole, et de façon encore préférée entre 80000 et 130000 g/mole.

La dispersité des copolymères hydrosolubles ou hydrodispersibles est inférieure à 2,2 et de préférence inférieure à 2.

La température de transition vitreuse (Tg) mesurée par DMA (dynamic mechanical analysis) du copolymère statistique présent dans la composition objet de l'invention est supérieure à 60 °C et de préférence supérieure à 110°C.

Les compositions hydrosolubles ou hydrodispersibles objet de l'invention peuvent contenir des modifiants chocs, qu'ils soient du type copolymères statistiques, à blocs, ou encore des particules cœur - écorce, seuls ou en combinaison.

Les compositions de l'inventions peuvent être utilisées comme agents dispersants pour pigments, ou encore comme modificateurs de rhéologie dans des applications aussi diverses que les boues de forage, les pâtes d'impression textile, la cosmétique, ou encore la détergence, et autres compositions de revêtement comme la peinture et comme agent anti-sédimentation et/ou de mise en suspension pour des charges minérales ou organiques grossières dans divers domaines comme par exemple le phytosanitaire, mais également le domaine de l'impression tridimensionnelle (ou impression 3D) d'un objet du type FDM (fused déposition molding) en tant que polymère sacrificiel. A ce titre, les compositions de l'invention peuvent être mises en forme sous forme de filament extrudé, avec ou sans modifiants chocs, ces filaments extrudés étant également objet de l'invention

L'invention porte également sur les objets obtenus à l'aide des compositions de l'invention.

### Exemples :

Le mélange de réactifs est le suivant :
- Amorceur : BlocBuilder^{®} (provenance Arkema ) ; amorceur de polymérisation radicalaire contrôlée.
- Styrène (St) (provenance Aldrich)
- Acide méthacrylique (AMA) (provenance Aldrich)
- Acide acrylique (AA) Acrylate de Butyle (ABu) (provenance Aldrich)
- Ethanol (provenance Aldrich)
- Toluène (provenance Aldrich)
- La charge des réacteurs est donnée au tableau 1

| Tableau 1 | Témoin | Essai 1 invention | Essai 2 invention | Essai 3 invention |
|---|---|---|---|---|
| Amorceur | 1,7 g | 2.1 g | 2,1 g | 1,5 g |
| Styrène | 149, 3 | 187 g | 187,9 g | 130 g |
| Acide méthacrylique | 200 g | 238.4 g | 218,5 g | 120 |
| Acide acrylique | 0 | 11.2g | 31,1 g | 55.1 g |
| Acrylate de Butyle | 153 g | 187 g | 188 g | 132 g |
| Ethanol | 179 g | 224 g | 224,3 g | 160 g |
| Toluène | 119 g | 150 g | 150 g | 110 |
| Température réacteur | 110-118°C | 110°-118°C | 110-118°C | 110-118°C |

La totalité des réactifs et des solvants est introduite dans un réacteur inox fermé de 2L, sous atmosphère d'azote. Le mélange est chauffé pendant 180 minutes, sous une agitation de 200tr/min.

La conversion finale est de 71%.

Les solvants et monomères résiduels sont éliminés dans une étuve sous vide à 100°C. Le résidu obtenu est broyé dans un mortier pour être utilisé sous forme de poudre.

### Mesures GPC

La mesure des masses par chromatographie d'exclusion stérique (étalons polystyrène) conduit aux résultats suivants (tableau 2) :

| Tableau 2 | Témoin | Essai 1 invention | Essai 2 invention | Essai 3 invention |
|---|---|---|---|---|
| Mn | 58000 | 59000 | 62000 | 55000 |
| Mw | 110000 | 113000 | 110000 | 105000 |
| Mp | 108000 | 113000 | 114000 | 105000 |
| Ip | 1,9 | 1,9 | 1,8 | 1,9 |

La composition des trois copolymères est analysée par RMN ¹H et donne les résultats suivants en % massique, tableau 3 :

| Tableau 3 | Témoin | Essai 1 invention | Essai 2 invention | Essai 3 invention |
|---|---|---|---|---|
| Styrène | 37 | 38, 2 | 38 | 39 |
| Acide méthacrylique | 40 | 34 | 35 | 16 |
| Acide acrylique | | 1,8 | 3 | 15 |
| Acrylate de Butyle | 23 | 26 | 24 | 30 |

### Tests de dissolution

Les copolymères obtenus sont chauffés à une température de 160°C sous une presse à compression pour former une pastille de 2.5cm de diamètre et 1mm d'épaisseur. Les pastilles sont ensuite placées dans un bécher, sous agitation, dans un milieu alcalin (solution tampon) à une température de 60°C.

Les échantillons sont sortis périodiquement et pesés pour évaluer la perte de poids en % liée à la dissolution du copolymère. Les tests sont réalisés à un pH de 12 à 60°C.

### (Tableau 4) :

**Tableau 4:**

| | | Perte de poids % | | | |
|---|---|---|---|---|---|
| Temps (min) | témoin | | Essai 1 invention | Essai 2 invention | Essai 3 invention |
| 0 | 0 | | 0 | 0 | 0 |
| 10 | 18 | | 34 | 34 | 32 |
| 20 | 30 | | 56 | 62 | 94 |
| 30 | 61 | | 82 | 87 | 100 |
| 40 | 83 | | 100 | 100 | 100 |

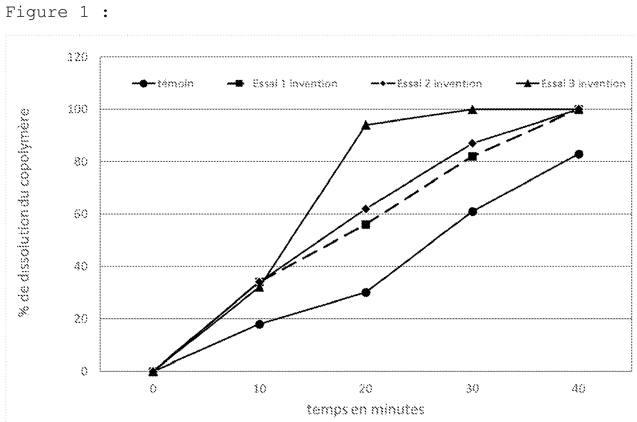

En figure 1 est visualisée la dissolution des copolymères témoin les copolymères de l'invention Essai 1 et 2 à pH=12 et 60°C.

On constate que les copolymères préparés à l'aide des quatre monomères St/AMA/AA/Abu (Invention) se dissolvent plus rapidement que ceux préparés sans acide acrylique tout en ayant une proportion de monomères hydrophiles (AMA + AA) légèrement inférieure en proportion molaire.

## Revendications

1. Composition comprenant un copolymère statistique préparé par polymérisation radicalaire contrôlée comprenant les monomères suivants :
- styrène, de 28 à 45 % massique, bornes comprises.
- acide méthacrylique, de 10 à 40 % massique, bornes comprises.
- acide acrylique, de 0.5 à 5 % massique, bornes comprises.
- acrylate de butyle, de 18 à 35 % massique, bornes comprises.

2. Composition selon la revendications 1 dans laquelle la masse moléculaire en poids du ou des copolymères, telle que déterminée par la méthode décrite dans la description, est comprise entre 30000 et 300000 g/mole.

3. Composition selon une des revendications 1 à 2 dans laquelle la température de transition vitreuse, mesurée par DMA est supérieure à 60 °C.

4. Composition selon une des revendications 2 à 3 selon laquelle la polymérisation est conduite par polymérisation radicalaire contrôlée de type RAFT.

5. Composition selon une des revendications 2 ou 3 dans laquelle la polymérisation est conduite par polymérisation radicalaire contrôlée de type ATRP.

6. Composition selon la revendication 2 ou 3 selon dans laquelle la polymérisation est conduite par polymérisation radicalaire contrôlée de type NMP.

7. Composition selon la revendication 6 dans laquelle le nitroxyde est issu des alcoxyamines dérivées du radical stable 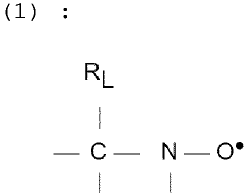 dans laquelle le radical R_{L} présente une masse molaire supérieure à 15,0342 g/mole.

8. Composition selon la revendication 7 dans laquelle
les alcoxyamines sont dérivées des radicaux stables suivants :
- N-tertiobutyl-1-phényl-2 méthyl propyl nitroxyde,
- N-tertiobutyl-1-(2-naphtyl)-2-méthyl propyl nitroxyde,
- N-tertiobutyl-1-diéthylphosphono-2,2-diméthyl propyl nitroxyde,
- N-tertiobutyl-1-dibenzylphosphono-2,2-diméthyl propyl nitroxyde,
- N-phényl-1-diéthyl phosphono-2,2-diméthyl propyl nitroxyde,
- N-phényl-1-diéthyl phosphono-1-méthyl éthyl nitroxyde,
- N-(1-phényl 2-méthyl propyl)-1-diéthylphosphono-1-méthyl éthyl nitroxyde,
- 4-oxo-2,2,6,6-tétraméthyl-1-piperidinyloxy,
- 2,4,6-tri-tert-butylphenoxy nitroxyde. N-tertiobutyl-1-diéthylphosphono-2,2-diméthyl propyl nitroxyde.

9. Composition selon la revendication 8 dans laquelle les alcoxyamines sont dérivées du N-tertiobutyl-1-diéthylphosphono-2,2-diméthyl propyl nitroxyde.

10. Utilisation d'une composition selon l'une des revendications 1 à 9 comme agents dispersants pour pigments, ou encore comme modificateurs de rhéologie dans des applications aussi diverses que les boues de forage, les pâtes d'impression textile, la cosmétique, ou encore la détergence, et autres compositions de revêtement comme la peinture et comme agent anti-sédimentation et/ou de mise en suspension pour des charges minérales ou organiques grossières dans divers domaines comme par exemple le phytosanitaire, mais également le domaine de l'impression tridimensionnelle (ou impression 3D) d'un objet du type FDM (fused déposition molding) en tant que polymère sacrificiel.

11. Filament extrudé à partir d'une composition de l'une des revendications 1 à 9.

## Patentansprüche

1. Zusammensetzung, die ein durch eine gesteuerte radikalische Polymerisation hergestelltes statistisches Copolymer umfasst, das die folgenden Monomere umfasst:
- Styrol, von 28 bis 45 Gew.-%, Grenzwerte eingeschlossen,
- Methacrylsäure, von 10 bis 40 Gew.-%, Grenzwerte eingeschlossen,
- Acrylsäure, von 0,5 bis 5 Gew. %, Grenzwerte eingeschlossen,
- Butylacrylat, von 18 bis 35 Gew.-%, Grenzwerte eingeschlossen.

2. Zusammensetzung nach Anspruch 1, wobei die gewichtsbezogene Molmasse des Copolymers oder der Copolymere, die mittels des in der Beschreibung beschriebenen Verfahrens bestimmt wird, zwischen 30000 und 300000 g/mol beträgt.

3. Zusammensetzung nach einem der Ansprüche 1 bis 2, wobei die mittels DMA gemessene Glasübergangstemperatur größer als 60 °C ist.

4. Zusammensetzung nach einem der Ansprüche 2 bis 3, wobei die Polymerisation mittels einer gesteuerten radikalischen Polymerisation vom RAFT-Typ durchgeführt wird.

5. Zusammensetzung nach einem der Ansprüche 2 bis 3, wobei die Polymerisation mittels einer gesteuerten radikalischen Polymerisation vom ATRP-Typ durchgeführt wird.

6. Zusammensetzung nach Anspruch 2 oder 3, wobei die Polymerisation mittels einer gesteuerten radikalischen Polymerisation vom NMP-Typ durchgeführt wird.

7. Zusammensetzung nach Anspruch 6, wobei das Nitroxid von Alkoxyaminen stammt, die vom stabilen Radikal (1): 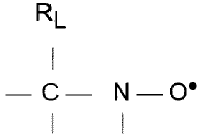 stammen, wobei der Rest R_{L} eine Molmasse von mehr als 15,0342 g/mol aufweist.

8. Zusammensetzung nach Anspruch 7, wobei die Alkoxyamine von den folgenden stabilen Radikalen stammen:
- N-Tertiärbutyl-1-phenyl-2-methylpropylnitroxid,
- N-Tertiärbutyl-1-(2-naphtyl)-2-methylpropylnitroxid,
- N-Tertiärbutyl-1-diethylphosphono-2,2-dimethylpropylnitroxid,
- N-Tertiärbutyl-1-dibenzylphosphono-2,2-dimethylpropylnitroxid,
- N-Phenyl-1-diethylphosphono-2,2-dimethylpropylnitroxid,
- N-Phenyl-l-diethylphosphono-1-methylethylnitroxid,
- N-(l-Phenyl-2-methylpropyl)-1-diethylphosphono-1-methylethylnitroxid,
- 4-Oxo-2,2,6,6-tetramethyl-1-piperidinyloxy,
- 2,4,6-Tri-tert-butylphenoxynitroxd,
- N-Tertiärbutyl-1-diethylphosphono-2,2-dimethylpropylnitroxid.

9. Zusammensetzung nach Anspruch 8, wobei die Alkoxyamine von N-Tertiärbutyl-1-diethylphosphono-2,2-dimethylpropylnitroxid stammen.

10. Verwendung einer Zusammensetzung nach einem der Ansprüche 1 bis 9 als Dispergiermittel für Pigmente oder sogar als Rheologieregler in so unterschiedlichen Anwendungen wie Bohrspülungen, Textildruckpasten, in der Kosmetik oder sogar in Detergenzien, und anderen Beschichtungszusammensetzungen, wie Anstrichmitteln, und als Absetzverhinderungs- und/oder Suspendiermittel für grobe mineralische oder organische Füllmittel auf verschiedenen Gebieten wie beispielsweise dem Pflanzenschutz, aber auch auf dem Gebiet des dreidimensionalen Drucks (oder 3D-Drucks) eines Gegenstandes vom FDM-Typ (Fused Deposition Molding) als Opferpolymer.

11. Filament, das aus einer Zusammensetzung nach einem der Ansprüche 1 bis 9 extrudiert ist.

## Claims

1. Composition comprising a random copolymer prepared by controlled radical polymerization comprising the following monomers:
- styrene, from 28% to 45% by weight, limits included;
- methacrylic acid, from 10% to 40% by weight, limits included;
- acrylic acid, from 0.5% to 5% by weight, limits included;
- butyl acrylate, from 18% to 35% by weight, limits included.

2. Composition according to Claim 1, in which the weight-average molecular weight of the copolymer(s), as determined by the method described in the description, is between 30 000 and 300 000 g/mol.

3. Composition according to either of Claims 1 and 2, in which the glass transition temperature, measured by DMA, is greater than 60°C.

4. Composition according to either of Claims 2 and 3, in which the polymerization is carried out by controlled radical polymerization of RAFT type.

5. Composition according to either of Claims 2 or 3, in which the polymerization is carried out by controlled radical polymerization of ATRP type.

6. Composition according to Claim 2 or 3, in which the polymerization is carried out by controlled radical polymerization of NMP type.

7. Composition according to Claim 6, in which the nitroxide results from the alkoxyamines derived from the stable radical 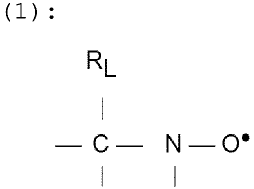 in which the radical R_{L} exhibits a molar mass of greater than 15.0342 g/mol.

8. Composition according to Claim 7, in which the alkoxyamines are derived from the following stable radicals:
- N-(tert-butyl)-1-phenyl-2-methylpropyl nitroxide,
- N-(tert-butyl)-1-(2-naphthyl)-2-methylpropyl nitroxide,
- N-(tert-butyl)-1-diethylphosphono-2,2-dimethylpropyl nitroxide,
- N-(tert-butyl)-1-dibenzylphosphono-2,2-dimethylpropyl nitroxide,
- N-phenyl-1-diethylphosphono-2,2-dimethylpropyl nitroxide,
- N-phenyl-1-diethylphosphono-1-methylethyl nitroxide,
- N-(1-phenyl-2-methylpropyl)-1-diethylphosphono-1-methylethyl nitroxide,
- 4-oxo-2,2,6,6-tetramethyl-1-piperidinyloxy,
- 2,4,6-tri(tert-butyl)phenoxy nitroxide,
- N-(tert-butyl)-1-diethylphosphono-2,2-dimethylpropyl nitroxide.

9. Composition according to Claim 8, in which the alkoxyamines are derived from N-(tert-butyl)-1-diethylphosphono-2,2-dimethylpropyl nitroxide.

10. Use of a composition according to one of Claims 1 to 9 as dispersing agents for pigments, or also as rheology modifiers in applications as diverse as drilling muds, textile printing pastes, the cosmetics industry, or also the detergents industry, and other coating compositions, such as paint, and as anti-settling and/or suspending agent for coarse inorganic or organic fillers in various fields, such as, for example, the phytosanitary field, but also the field of three-dimensional printing (or 3D printing) of an object of the FDM (fused deposition modelling) type as sacrificial polymer.

11. Filament extruded from a composition of one of Claims 1 to 9.
